**Europäisches Patentamt**

**European Patent Office**

**Office européen des brevets**

(11) Veröffentlichungsnummer: **0 518 158 A1**

# EUROPÄISCHE PATENTANMELDUNG

(21) Anmeldenummer: **92109222.7**

(22) Anmeldetag: **02.06.92**

(51) Int. Cl.5: **B60N 2/08**

(30) Priorität: **14.06.91 US 715538**

(43) Veröffentlichungstag der Anmeldung:
**16.12.92 Patentblatt 92/51**

(84) Benannte Vertragsstaaten:
**DE ES FR GB IT SE**

(71) Anmelder: **DEERE & COMPANY**
**1 John Deere Road**
**Moline, Illinois 61265(US)**

(72) Erfinder: **Teal, Richard Donald**
**510 S. Ridge Circle**
**Horicon, Wisconsin 53032(US)**

Erfinder: **Hutchison, Wayne Robert**
**N7840 Hwy. TW.**
**Mayville, Wisconsin 53050(US)**
Erfinder: **Wasson, Steven Charles**
**4422 W. Wackerly**
**Midland, Michigan 48667(US)**
Erfinder: **Daniel, David Robert**
**4601 Oakridge Drive**
**Midland, Michigan 48640(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Sitzverstellung für einen Fahrzeugsitz.**

(57) Bei einer Sitzverstellung für einen auf einem Fahrzeugrahmen längsverstellbar angeordneten und mit einem Sitzträger (40) verbundenen Fahrzeugsitz, insbesondere für einen in der Rasen- und Grundstückspflege einsetzbaren Kleinschlepper, sind am Fahrzeugrahmen (42) in Fahrzeuglängsrichtung gesehen hintereinander angeordnete Rasterstellen (68) vorgesehen und in den Sitzträger (40) ist mindestens ein ausbiegbares und von Hand erfaßbares Laschenteil integriert, der wahlweise in eine der Rasterstellen (68) eingreifen kann, in Richtung auf die Rasterstellen (68) vorgespannt ist und in eine Stellung ausbiegbar ist, in der er die Rasterstelle freigibt und eine Längsverstellung des Sitzes in einem am Rahmen (42) vorgesehenen Führungsmittel (52) erlaubt.

Fig. 4

Die Erfindung bezieht sich auf eine Sitzverstellung für einen auf einem Fahrzeugrahmen längsverstellbar angeordneten und mit einem Sitzträger verbundenen Fahrzeugsitz, insbesondere für einen in der Rasen- und Grundstückspflege einsetzbaren Kleinschlepper.

Bei dieser bekannten Sitzverstellung (US-A-4 549 765), die für einen Kleinschlepper für den Einsatz in der Grundstücks- und Rasenpflege konzipiert ist, weist der Sitzträger Langlöcher auf, durch die mit dem Fahrzeugrahmen mittelbar verbundene Schrauben ragen. Durch Festziehen von auf die Schrauben aufschraubbaren Muttern kann der Sitz in seiner jeweiligen Position festgestellt werden. Diese Sitzverstellung ist in ihrem Aufbau relativ einfach. Zur Verstellung des Sitzes in Fahrzeuglängsrichtung sind jedoch Werkzeuge erforderlich.

Andererseits ist es auch nicht mehr neu (US-A-4 198 092), die Feststellung des Sitzes ohne Werkzeuge zu lösen. Der Fahrer muß aber dann zur Sitzverstellung das Fahrzeug verlassen.

Die mit der Erfindung zu lösende Aufgabe wird darin gesehen, einen Fahrzeugsitz bei sich auf dem Sitz befindlichen Fahrer ohne Werkzeuge verstellen zu können. Diese Aufgabe ist nach der Erfindung dadurch gelöst worden, daß am Fahrzeugrahmen in Fahrzeuglängsrichtung gesehen hintereinander angeordnete Rasterstellen vorgesehen sind und in den Sitzträger mindestens ein ausbiegbares und von Hand erfaßbares Laschenteil integriert ist, der wahlweise in eine der Rasterstellen eingreifen kann, in Richtung auf die Rasterstellen vorgespannt ist und in eine Stellung ausbiegbar ist, in der er die Rasterstelle freigibt und eine Längsverstellung des Sitzes in einem am Rahmen vorgesehenen Führungsmittel erlaubt. Auf diese Weise ist eine einfache von Hand lösbare Sitzverstellung geschaffen, bei der nach dem Loslassen des oder der Laschenteile eine selbsttätige Verriegelung erfolgt. Der Fahrer kann bei der Längsverstellung auf dem Sitz verbleiben und sein Gewicht wird von dem Führungsmittel aufgefangen.

Eine einfache und kostengünstige Fertigung läßt sich erreichen, wenn nach einem weiteren Vorschlag der Erfindung der Sitzträger und der oder die Laschenteile aus Kunststoff hergestellt sind.

Vorteilhaft ist ferner, daß jeder Laschenteil einen Biegeteil aufweist, der sich verbiegt, wenn die Bedienungsperson den Laschenteil in seine Stellung ausbiegt, in der die Rasterstelle freigegeben ist.

Eine sichere Verriegelung läßt sich leicht dadurch erreichen, daß jeder Laschenteil mit einem als Zahn ausgebildeten Griffteil versehen ist, der in Aussparungen in den Rasterstellen eingreifen kann.

Zweckmäßig kann der verwendete Werkstoff für den Laschenteil und / oder den Biegeteil den Laschenteil in Richtung auf die Rasterstellen vorspannen.

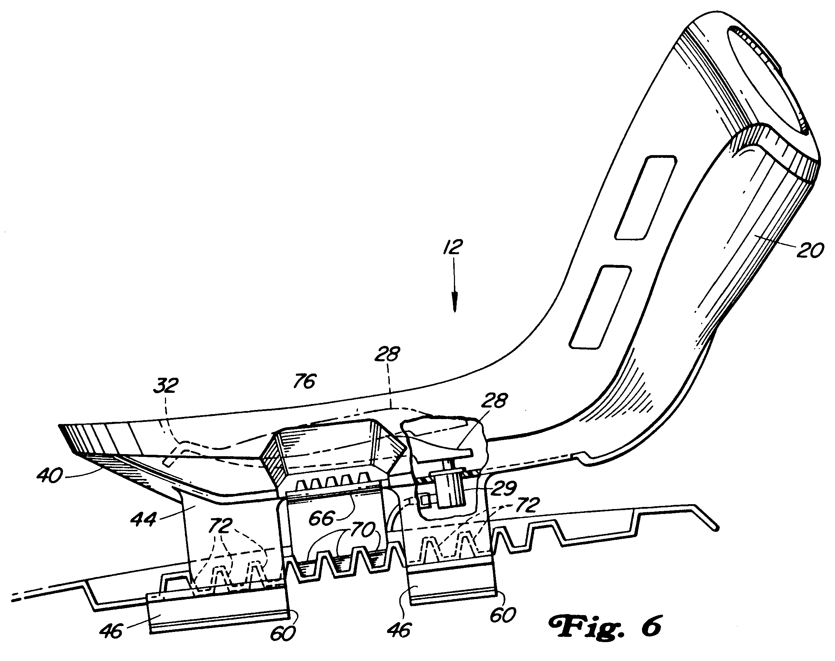

Damit eine Vorspannung ohne zusätzliche Mittel erzeugt werden kann, sieht die Erfindung außerdem vor, daß der Laschenteil und / oder der Biegeteil im vormontierten Zustand mit Bezug auf den Sitzträger nicht ausgebogen sind, im auf dem Rahmen montierten Zustand, in dem der Laschenteil in eine der Rasterstellen eingreift, ausgebogen sind und noch stärker ausgebogen werden, wenn der Eingriff eines Laschenteiles aus seiner Rasterstelle gelöst wird. Der vormontierte Zustand ergibt sich aus der Darstellung in Fig. 5.

Damit der Sitz an seinen beiden Längsseiten verriegelt werden kann, wird ferner vorgeschlagen, daß beiderseits des Sitzträgers ein Laschenteil vorgesehen ist, die über den in den Sitzträger integrierten Biegeteil miteinander verbunden sind. Der Biegeteil kann hierzu etwa in seiner Mitte auf dem Sitzträger aufliegen und durch einen Kanalteil, der das Ausbiegen seiner Seiten zuläßt, geschützt sein. Er wird dann nicht mit dem Gewicht des Fahrers an seinen Enden belastet. Damit der Biegeteil auf dem Sitzträger aufliegt, kann der Kanalteil eine entsprechende Bogenform aufweisen. Auch kann der Biegeteil durch Leisten oder Rippen verstärkt sein.

Zweckmäßig besteht der gesamte Fahrzeugaufbau aus einem Kunststoff, so daß auch das Führungsmittel aus Kunststoff hergestellt ist, in den Rahmen integriert ist und mindestens in den Sitzträger integrierte Fußstütze aufnimmt, die ebenfalls aus Kunststoff besteht.

Bei dem Verstellen des Sitzes sollte dafür Sorge getragen werden, daß der Sitz sich nicht nach oben oder zur Seite bewegen kann und die aus Kunststoff bestehende Gesamtvorrichtung stabil genug ist, das Fahrergewicht ohne ungewollte Verbiegungen aufzunehmen. Die Erfindung sieht deshalb ferner vor, daß die sich in Fahrzeuglängsrichtung erstreckenden Rasterstellen an ihrer Unterseite zumindest teilweise eine zweite quer gerichtete Anschlagfläche bilden, gegen die eine Gegenfläche zur Anlage kommen kann, die an der in den Sitzträger integrierten Fußstütze vorgesehen ist, wobei die Fußstütze eine Auflagefläche mit einer horizontalen Komponente aufweist, die sich auf einer ersten Oberfläche des in den Rahmen integrierten Führungsmittels abstützt, das mit einem Vertikalteil ausgerüstet ist, der gegen einen entsprechenden Teil an der Fußstütze anliegt.

Eine besonders gute und auch einen seitlichen Halt gebende Führung läßt sich dadurch noch verbessern, daß jede Fußstütze mit wenigstens einem nach unten vorspringenden Teil versehen ist, der in einer Nut im Führungsmittel gleitend geführt ist.

In der Zeichnung ist ein nachfolgend näher erläutertes Ausführungsbeispiel der Erfindung dargestellt. Es zeigt:

Fig. 1 ein Fahrzeug für die Grundstückspflege,

Fig. 2 einen aus zwei Schalen gebildeten Sitz in auseinandergezogener Darstellung,

Fig. 3 ein Sitzgestell in perspektivischer Darstellung,

Fig. 4 das Sitzgestell nach Fig. 3 mit einer Sitzführung im Schnitt,

Fig. 5 eine Einrichtung zum Verrasten des Sitzes,

Fig. 6 einen in den Sitz zu integrierender Brennstofftank und

Fig. 7 das Sitzgestell in einer Ansicht von unten.

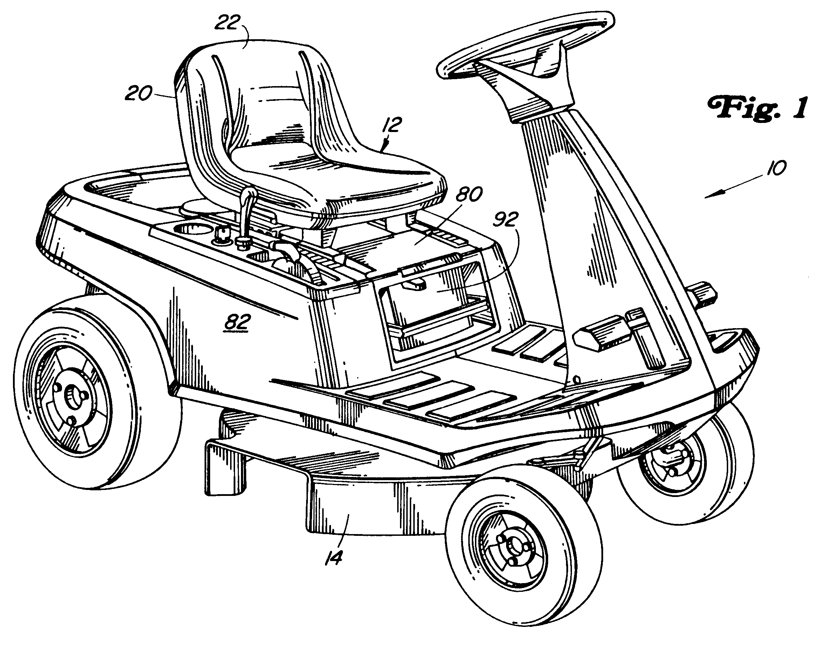

In Fig. 1 der Zeichnung ist ein Fahrzeug 10 für die Grundstückspflege dargestellt, dessen Aufbau im wesentlichen aus Kunststoff besteht. Es ist mit einem Sitz 12 und einem nicht dargestellten Verbrennungsmotor ausgerüstet und trägt zwischen seinen Achsen ein Mähwerksgehäuse 14, in dem für den Rasenschnitt ein oder mehrere umlaufende Messer angeordnet sind.

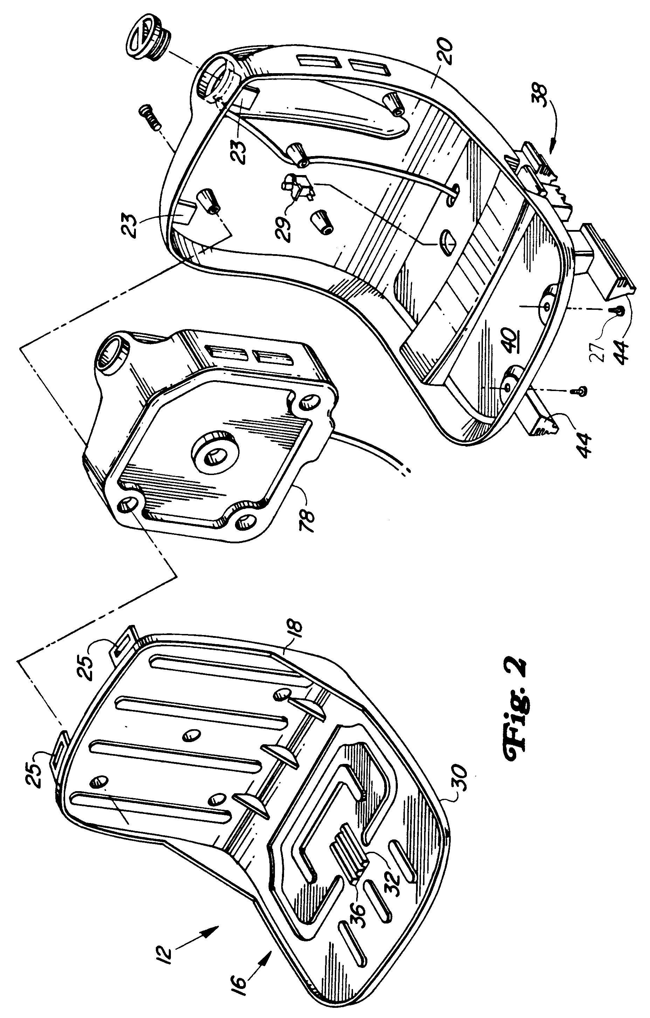

Eine einen elektrischen Schalter betätigende Einrichtung 16 ist in den Fig. 2 und 6 dargestellt. Aus Fig. 2 ist eine erste und eine zweite Sitzschale 18 und 20 erkennbar, die aus Kunststoff gegossen sind und für den Einsatz miteinander verbunden werden. Ein in Fig. 1 eingezeichnetes Sitzkissen 22, auf dem der Fahrer Platz nimmt, ist mit der ersten Sitzschale 18 entsprechend verbunden. Zum Verbinden der beiden Sitzschalen 18 und 20 sind an der zweiten Sitzschale 20 Stöpsel 23 angeformt, die in Schlitze 25 einsteckbar sind, die ihrerseits in die erste Sitzschale 18 integriert sind. Die frontseitigen Bereiche der beiden Sitzschalen 18 und 20 sind über Schrauben 27 miteinander befestigt. Der erste Sitzteil 18 befindet sich im zusammengebauten Zustand auf dem zweiten Sitzteil 20, der mit einem Schalter 29 versehen ist. Dieser wiederum ist mit einem Kolbenmechanismus versehen, der durch eine Öffnung 24 in einem Sitzträger 40 geführt ist. Der Schalter 29 steht über Leitungen mit dem Verbrennungsmotor, einer Kupplung für das Mähwerk und gegebenenfalls mit anderen Fahrzeugkomponenten in Verbindung, um die verschiedenen Funktionen aus Sicherheitsgründen ausgeschaltet zu halten, wenn sich auf dem Fahrersitz 12 keine Bedienungsperson aufhält. Der Schalter 29 ist dann ausgeschaltet. Aus der eingeschalteten Stellung wird der Schalter 29 in seine ausgeschaltete Stellung durch eine ausbiegbare Schalterklappe 28 verbracht, die in einem horizontal verlaufenden Teil 30 der ersten Sitzschale 18 vorgesehen ist. Sitzt nun eine Bedienungsperson auf dem horizontalen Teil der ersten Sitzschale, so wird zumindest ein Teil des Fahrergewichtes auf die Schalterklappe 28 einwirken, die sich dann unter dem Gewicht des Fahrers nach unten biegt und den Schalter 29 einschaltet. Ein Biegeteil 32 befindet sich noch zwischen der ersten Sitzschale 18 und einem vorderen Teil der Schalterklappe 29 und kann die Schalterklappe ebenfalls nach unten ausbiegen, wenn sie mit dem Fahrergewicht belastet ist. Der Biegeteil 32 ist in die erste Sitzschale integriert und mit Verstärkungsrippen 36 versehen, um die Festigkeit des Biegeteils zu erhöhen.

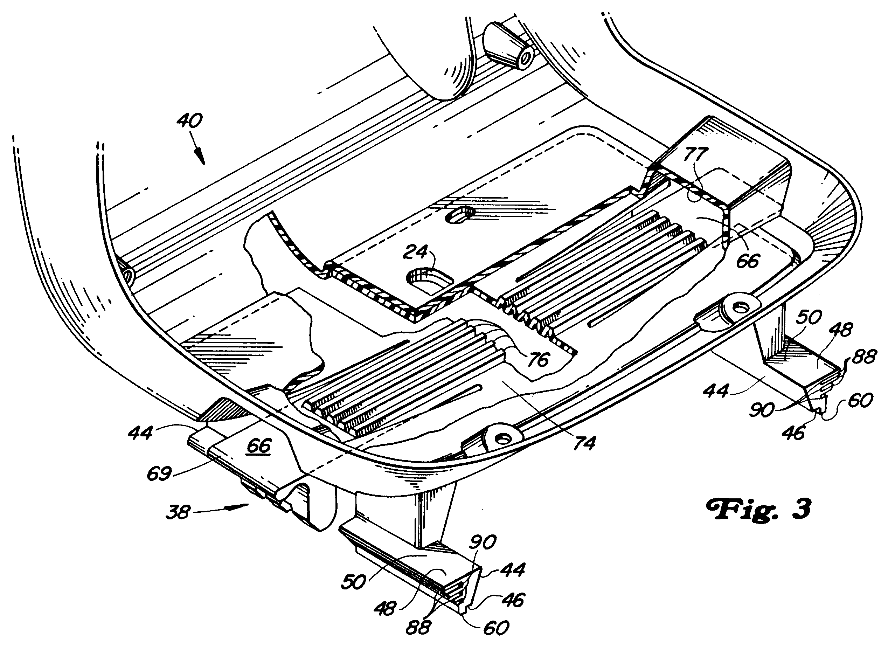

Eine Sitzeinstellvorrichtung 38 dient dazu, den Sitz in Fahrzeuglängsrichtung verschieben und dann auch feststellen zu können. Hierzu gehört der bereits erwähnte Sitzträger 40, der ebenfalls aus Kunststoff hergestellt ist. Dieser Sitzträger 40 ist u. a. in Fig. 3 dargestellt und mit der zweiten Sitzschale, und zwar unter ihr, verschmolzen, an ihr angeschweißt oder anderweitig verbunden, um den Sitz oberhalb des Fahrzeugaufbaus und auf einem Grundrahmen 42 des Fahrzeuges 10 tragen zu können. Der Sitzträger 40 ist mit mehreren Fußstützen 44 ausgerüstet, die in zwei Reihen mit seitlichem Abstand zueinander angeordnet sind. Jede Reihe Fußstützen 44 bildet eine erste Oberfläche 46 mit einer unteren horizontal verlaufenden Komponente, über die zumindest ein Teil des Fahrergewichtes auf den Grundrahmen 42 übertragen wird. Außerdem sind die Fußstützen mit einer seitlichen Erstreckung 48 versehen, die eine nach oben weisende zweite Oberfläche 50 bildet.

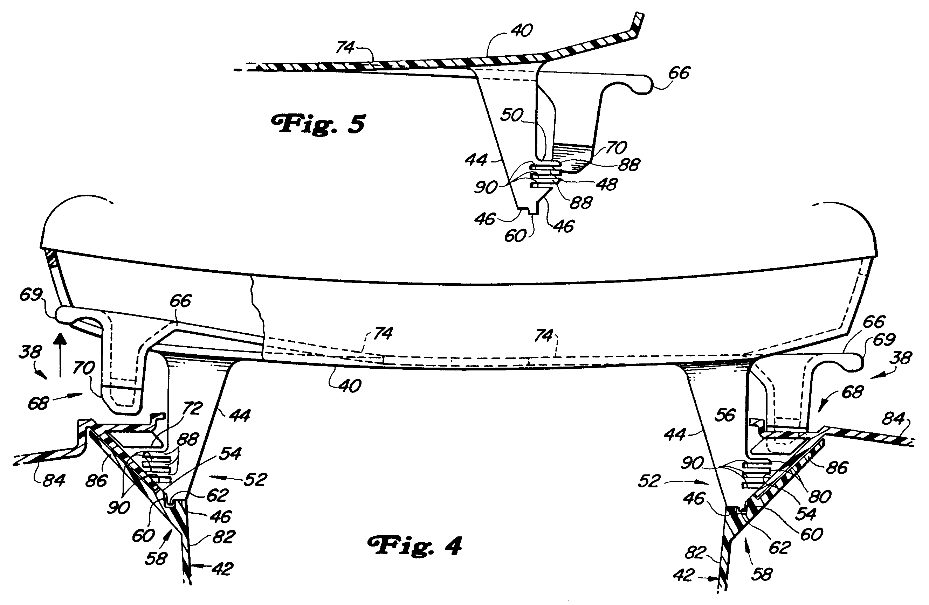

Den beiden Reihen Fußstützen sind Führungsmittel 52 zugeordnet. Diese Führungsmittel sind in Fig. 4 im Querschnitt zu erkennen und in den Grundrahmen 42, der den Sitz 12 aufnimmt, integriert. Auch die beiden Führungsmittel 52 haben eine erste Oberfläche 54 mit einer horizontalen Komponente, die gegen die ersten Oberflächen 46 der Fußstützen 44 anliegen und so zumindest einen Teil des Gewichtes des Fahrers und des Sitzes 12 auf den Grundrahmen 42 übertragen. Die Führungsmittel 52 haben außerdem eine zweite untere Oberfläche 56, die sich seitlich erstreckt und gegen die zweite Oberfläche 50 der Fußstützen 44 zur Anlage kommen kann. Hierdurch wird verhindert, daß die Fußstützen sich im Einsatz nach oben verstellen können. Der Sitz 12 ist dadurch sicher an dem Fahrzeug 10 festgelegt.

Vertikal sich erstreckende Eingriffsteile 58 sind noch an den Fußstützen 44 und an den Führungsmitteln 52 vorgesehen. Sie verhindern, daß sich die Führungsmittel 52 und die Fußstützen unter dem Gewicht des Fahrers relativ gegeneinander seitlich verstellen können. Die Eingriffsteile 58 bestehen im einzelnen aus einem an den Fußstützen 44 angeordneten und von diesen aus gesehen nach unten vorstehenden Teil 60, der in eine sich längs erstreckende Nut 62 eingreift, die Bestandteil der Führungsmittel 52 ist.

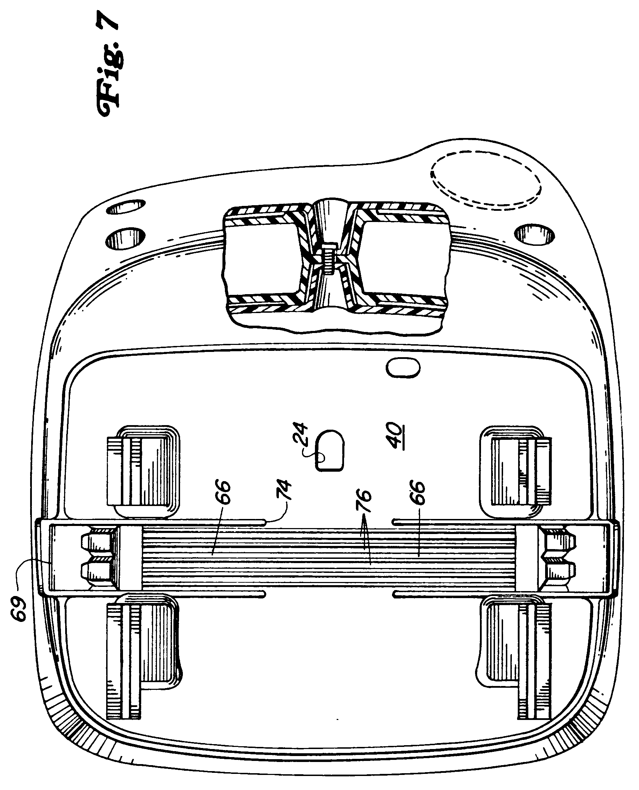

Der Sitz 12 ist auch in verschiedenen Längsstellungen sicher- bzw. verriegelbar. Hierzu sind in den Sitzträger 40 zwei nach oben ausbiegbare Laschen 66 integriert, die in in Längsrichtung des Fahrzeuges hintereinander angeordnete Raster 68 eingreifen können, wodurch der Sitz 12 dann gegen Längsverstellen gesichert ist. Die an den beiden Seiten des Sitzes vorgesehenen Laschen 66 sind noch mit je einem Griffteil 69 ausgerüstet, die von dem Fahrer mit seinen Händen erfaßt und nach oben gebogen werden können. Dadurch werden auch die Flansche 66 nach oben gebogen, wodurch sie eine Stellung einnehmen, in der sie nicht mehr in die Raster 68 eingreifen. Der Sitz ist damit frei und kann längs verschoben werden. Sobald die Griffteile 69 losgelassen werden, schnellen sie in eine Stellung zurück, in der sie wieder in die dann unter ihnen liegenden Raster 68 eingreifen können. Zum Eingreifen in die Raster 68 sind die Laschen 66 an ihren unteren Enden mit je einem zahnförmigen Teil 70 versehen, während die Raster 68 aus in Längsrichtung zueinander ausgerichteten Aussparungen 72 bestehen. Die Unterseiten der Aussparungen 72 bilden mit ihren zwischen den Aussparungen verbleibenden Stegen die zweite untere Oberfläche 56 der Führungsmittel 52, die ein nach oben Verstellen der zweiten Oberfläche 50 der Fußstützen 44 verhindert. Ein Biegeteil 74 verbindet die beiden seitlich angeordneten Laschen 66 miteinander und ist in den Sitzträger integriert. In den Fig. 3, 6 und 7 dargestellte Verstärkungsrippen 76 sind an dem Biegeteil 74 vorgesehen und geben dem Biegeteil eine ausreichende Steifigkeit, wenn dieser beim Hochziehen der Griffteile 69 nach unten ausbiegt. Eine Anschlagfläche 77, die am besten aus der Fig. 3 erkennbar ist, ist noch an der zweiten Sitzschale 20 vorgesehen. Gegen diese Anschlagfläche 77 können die Laschen 66 zur Anlage kommen, wenn sie nach oben gebogen werden. Die Anschlagfläche 77 begrenzt damit die Ausbiegung nach oben und verhindert, daß der Biegeteil 74 brechen oder nach einer längeren Einsatzzeit seine Flexibilität verlieren könnte.

Ein in Fig. 2 am besten erkennbarer Brennstofftank 78 ist noch in dem Sitz 12 vorgesehen, und zwar zwischen den Rückenteilen der ersten und zweiten Sitzschale 18 und 20.

Belastet ein Fahrer das Sitzkissen 22 mit seinem Gewicht, dann wird der Schalter 29 eingerückt und das Fahrzeug kann betrieben werden. Hat der Sitz 12 dann aber keine dem Fahrer passende Stellung, so kann er den Sitz längs verstellen. Hierzu kann der Fahrer auf dem Sitz verbleiben. Er braucht lediglich mit seinen beiden Händen die Griffteile 69 nach oben zu ziehen, wodurch der Biegeteil 74 nach unten ausbiegt und die zahnförmigen Teile 70 aus ihren Aussparungen 72 austreten. Dies ist auf der linken Seite der Fig. 4 eingezeichnet. Sobald die beiden Laschen 66 aus den Rastern 68 ausgetreten sind, kann der Fahrer den Sitz 12 in eine gewünschte neue Position verstellen. Beim Längsverschieben des Sitzes werden die Fußstützen 44 in den Führungsmitteln 52 gleiten. Die nach unten vorstehenden Teile 60 führen den Sitz dann in den Nuten 62 auf einer geraden in Fahrzeuglängsrichtung verlaufenden Bahn. Die ersten Oberflächen 46 und 54 der Fußstützen 44 und der Führungsteile 52 liegen dabei auch gegeneinander an und unterstützen die Führung des Sitzes auf seiner geraden Bahn.

Nimmt der Sitz 12 seine gewünschte neue Position ein, dann kann der Fahrer die Griffteile 69 wieder loslassen, so daß die Laschen 66 nach unten schnellen und in die entsprechenden Aussparungen 72 einrasten können. Dies ist auf der rechten Seite der Fig. 4 eingezeichnet. Sobald die beiden zahnförmigen Teile 70 in ein Paar Aussparungen 72 eingreifen, ist der Sitz gegen Längsverstellung verrastet.

Der Sitzträger 40 ist aus Kunststoff gegossen und die Laschen 66 sind in den Sitzträger 40 integriert. Dies geht aus der Fig. 5 hervor, die den Sitzträger in seinem nicht mit dem Fahrzeug verbundenen Zustand zeigt. In diesem Zustand ist der Biegeteil 74 weder nach unten noch nach oben gebogen und die Laschen nehmen eine Stellung ein, die tiefer als die Stellung liegt, in der die Laschen bei sich auf das Fahrzeug aufmontierten Sitz befinden. Bei der Montage werden deshalb die Laschen eine höhere Stellung einnehmen, in der der Biegeteil bereits ein wenig nach unten ausgebogen ist, wie es aus der rechten Seite der Fig. 4 zu entnehmen ist. Die Laschen 66 sind dabei im eingebauten Zustand und verriegeltem Sitz bereits etwas nach oben ausgebogen. Die Laschen 66 haben damit die Tendenz aus ihrer in Fig. 4 auf der rechten Seite gezeigten Stellung in die Stellung nach Fig. 5 zurückzufedern. Auf diese Weise haben die Laschen im eingebauten Zustand bereits eine Spannung oder Federung, die die Laschen 66 in ihrem Eingriff mit den Rastern 68 hält. Beim Hochziehen der Griffteile 69 wird der Biegeteil 74 dann noch mehr nach unten ausgebogen, wie es auf der linken Seite der Fig. 4 zu erkennen ist. Beim Loslassen der Laschen springen diese dann in ihre in Fig. 4, rechts gezeigte Stellung zurück. Ein separater Federmechanismus, der die Laschen in ihrem Eingriff halten würde, ist daher bei dieser Ausbildung der Sitzeinstellvorrichtung nicht erforderlich.

Das in Fig. 1 wiedergebene Fahrzeug 10 ist unterhalb seines Sitzes 12 mit einem Gehäuseabschnitt 80 versehen, der zur Aufnahme von weiteren Fahrzeugkomponenten, wie einer Batterie, dient. Der Gehäuseabschnitt wird durch im wesentlichen vertikal verlaufende seitliche Gehäusewände 82 begrenzt, von denen die Führungsmittel 52 und die Raster 68 getragen werden. Der Sitz 12 deckt den Gehäuseabschnitt 80 nach oben hin ab. Wären nicht besondere Vorkehrungen getroffen, so könnte das den Sitz 12 belastende Gewicht des Fahrers dazu führen, daß die aus Kunststoff bestehenden Gehäusewände 82 nach außen gedrückt werden, wodurch der Sitz mit dem Fahrer nach unten rutschen könnte. Auch die Fußstützen 44 könnten unter dem Gewicht des Fahrers nach innen ausgebogen werden, wodurch ebenfalls der Sitz 12 zwischen den Gehäusewänden 82 nach unten in den Gehäuseabschnitt 80 rutschen könnte. Um dies alles zu verhindern, sind die Eingriffsteile 58 vorgesehen, die, wie bereits ausgeführt wurde, Bestandteil der Fußstützen 44 und der Führungsmittel 52 sind. Sie bestehen aus den nach unten vorspringenden Teilen 60 und den beiden diese aufnehmenden Nuten 62 in den Führungsmitteln 52. Auf diese Weise verhindern die Eingriffsteile 58, daß sich die Führungsmittel 52 unter dem Gewicht des Fahrers seitlich ausbiegen. Da sich die Führungsmittel 52 unmittelbar unter den Fußstützen 44 befinden, verbleiben auch die seitlichen Wände, an denen die Führungsmittel 52 angreifen, direkt neben den Fußstützen 44 und können sich nicht seitlich ausbiegen. Der Sitzträger 40 hält damit die seitlichen Gehäusewände 82 in ihrer aufrechten Stellung. Andererseits verhindern die Führungsmittel 52, daß sich die Fußstützen 44 unter dem Gewicht des Fahrers nach innen schieben können. Auf diese Weise können die seitlichen Gehäusewände 82 des Gehäuseabschnittes 80 sowie die Fußstützen 44 des Sitzträgers 40 aus relativ weichem Material, wie Kunststoff, hergestellt werden.

Fig. 4 zeigt die Führungsmittel 52 und die Raster 68 im Querschnitt. Es ist ein erster aus Kunststoff gegossener Bauteil 84 und ein damit verhafteter zweiter Bauteil 86 erkennbar, der ebenfalls aus einem ähnlichen Material besteht. Der erste Bauteil 84 erstreckt sich seitlich und dient als Fahrzeuggehäuse oder Aufbau. Die Aussparungen 72, die Nuten 62 und die ersten und zweiten Oberflächen 54 und 56 sind alle in den ersten oder zweiten Bauteil 84 oder 86 integriert. Die Teileanzahl und damit die Kosten für die Herstellung und den Zusammenbau werden somit erheblich reduziert.

Aus Fig. 3 ist noch zu erkennen, daß der Querteil 48 der Fußstützen 44 mit sich seitlich erstreckenden Rippen 88 ausgerüstet sein kann, zwischen denen sich horizontale Schlitze 90 erstrecken. Die Rippen 88 gehören zu der ersten Oberfläche 46 der Fußstützen 44. Die Schlitze bedeuten eine Materialeinsparung und tragen mit dazu bei, daß der Sitzträger 40 nach dem Gießen schneller abkühlen kann. Die Herstellungskosten werden dadurch vermindert.

Der Sitz 12 kann von dem Fahrzeug 10 vollständig entfernt werden. Eine Abdeckung 92 für die Batterie dient als Frontseite des Gehäuseabschnittes 80 und gleichzeitig als Frontseite der Führungsmittel 52. Wenn die Abdeckung 92 den Gehäuseabschnitt frontseitig verschließt, können die Fußstützen frontseitig nicht mehr aus den Führungsmitteln 52 austreten. Wird die Abdeckung 92 entfernt, dann können die Fußstützen 44 frontseitig aus den Führungsmitteln 52 gezogen und der Sitz 12 kann von dem Fahrzeug 10 abgenommen werden.

**Patentansprüche**

1. Sitzverstellung für einen auf einem Fahrzeugrahmen (42) längsverstellbar angeordneten und mit einem Sitzträger (40) verbundenen Fahrzeugsitz (12), insbesondere für einen in der Rasen- und Grundstückspflege einsetzbaren Kleinschlepper, dadurch gekennzeichnet, daß am Fahrzeugrahmen (42) in Fahrzeuglängsrichtung gesehen hintereinander angeordnete Rasterstellen (68) vorgesehen sind und in den Sitzträger (40) mindestens ein ausbiegbares und von Hand erfaßbares Laschenteil (66) integriert ist, der wahlweise in eine der Rasterstellen (68) eingreifen kann, in Richtung auf die Rasterstellen (68) vorgespannt ist und in eine Stellung ausbiegbar ist, in der er die Rasterstelle freigibt und eine Längsverstellung des Sitzes (12) in einem am Rahmen (42) vorgesehenen Führungsmittel (52) erlaubt.

2. Sitzverstellung nach Anspruch 1, dadurch gekennzeichnet, daß der Sitzträger (40) und der oder die Laschenteile (66) aus Kunststoff hergestellt sind.

3. Sitzverstellung nach Anspruch 1, dadurch gekennzeichnet, daß jeder Laschenteil (66) einen Biegeteil (74) aufweist, der sich verbiegt, wenn die Bedienungsperson den Laschenteil (66) in seine Stellung ausbiegt, in der die Rasterstelle (68) freigegeben ist.

4. Sitzverstellung nach einem oder mehreren der vorherigen Ansprüche, dadurch gekennzeichnet, daß jeder Laschenteil (66) mit einem als Zahn ausgebildeten Griffteil (70) versehen ist, der in Aussparungen (72) in den Rasterstellen (68) eingreifen kann.

5. Sitzverstellung nach einem oder mehreren der vorherigen Ansprüche, dadurch gekennzeichnet, daß der verwendete Werkstoff für den Laschenteil (66) und / oder den Biegeteil (74) den Laschenteil (66) in Richtung auf die Rasterstellen (68) vorspannt.

6. Sitzverstellung nach Anspruch 5, dadurch gekennzeichnet, daß der Laschenteil (66) und / oder der Biegeteil (74) im vormontierten Zustand mit Bezug auf den Sitzträger (40) nicht ausgebogen ist, im auf dem Rahmen (42) montierten Zustand, in dem der Laschenteil (66) in eine der Rasterstellen (68) eingreift, ausgebogen ist und noch stärker ausgebogen wird, wenn der Eingriff eines Laschenteiles (66) aus seiner Rasterstelle (68) gelöst wird.

7. Sitzverstellung nach einem oder mehreren der vorherigen Ansprüche, dadurch gekennzeichnet, daß beiderseits des Sitzträgers (40) ein Laschenteil (66) vorgesehen ist, die über den in den Sitzträger (40) integrierten Biegeteil (74) miteinander verbunden sind.

8. Sitzverstellung nach Anspruch 7, dadurch gekennzeichnet, daß der Biegeteil (74) durch Leisten oder Rippen (76) verstärkt ist.

9. Sitzverstellung nach Anspruch 1, dadurch gekennzeichnet, daß das Führungsmittel (52) aus Kunststoff hergestellt ist, in den Rahmen (42) integriert ist und mindestens eine in den Sitzträger (40) integrierte Fußstütze (44) aufnimmt.

10. Sitzverstellung nach einem oder mehreren der vorherigen Ansprüche, dadurch gekennzeichnet, daß die sich in Fahrzeuglängsrichtung erstreckenden Rasterstellen (68) an ihrer Unterseite zumindest teilweise eine zweite quer gerichtete Anschlagfläche (56) bilden, gegen die eine Gegenfläche (50) zur Anlage kommen kann, die an der in den Sitzträger (40) integrierten Fußstütze (44) vorgesehen ist, wobei die Fußstütze eine Auflagefläche (46) mit einer horizontalen Komponenten aufweist, die sich auf einer ersten Oberfläche (54) des in den Rahmen (42) integrierten Führungsmittels (52) abstützt, das mit einem Vertikalteil ausgerüstet ist, der gegen einen entsprechenden Teil an der Fußstütze anliegt.

11. Sitzverstellung nach einem oder mehreren der vorherigen Ansprüche, dadurch gekennzeichnet, daß jede Fußstütze (44) mit wenigstens einen nach unten vorspringendem Teil (60) versehen ist, der in einer Nut (62) im Führungsmittel (52) gleitend geführt ist.

Fig. 1

EP 0 518 158 A1

**Fig. 2**

Fig. 3

Fig. 5

Fig. 4

Fig. 6

EP 0 518 158 A1

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 325 446 (HICKS) <br> * Zusammenfassung; Abbildungen 1,2 * <br> --- | 1 | B60N2/08 |
| A | DE-A-3 227 351 (KEIPER AUTOMOBILTECHNIK) <br> * Zusammenfassung; Abbildung 2 * <br> --- | 1 | |
| D,A | US-A-4 549 765 (HOCH) <br> * Zusammenfassung; Abbildung 1 * <br> --- | 1 | |
| D,A | US-A-4 198 092 (FEDERSPIEL) <br> * Zusammenfassung; Abbildung 3 * <br> ----- | 1 | |

**RECHERCHIERTE SACHGEBIETE (Int. Cl.5 )**

B60N
A01D

Der vorliegende Recherchenbericht wurde für alle Patentansprüche erstellt

| Recherchenort | Abschlußdatum der Recherche | Prüfer |
|---|---|---|
| BERLIN | 13 AUGUST 1992 | BECKER W.D.H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)